# EUROPÄISCHE PATENTSCHRIFT

(11) **EP 1 456 137 B1**
(45) Veröffentlichungstag und Bekanntmachung des Hinweises auf die Patenterteilung: **07.07.2010**
(21) Anmeldenummer: 02796511.0
(22) Anmeldetag: 14.12.2002
(51) Int. Cl.: C02F 3/20, B01F 3/04

(54) **KLÄRBECKENMEMBRAN**
CLARIFICATION BASIN MEMBRANE
MEMBRANE POUR BASSIN DE DECANTATION

(30) Priorität: 22.12.2001 DE 10163973
(43) Veröffentlichungstag der Anmeldung: 15.09.2004
(73) Patentinhaber: ContiTech Vibration Control GmbH, 30165 Hannover (DE)
(72) Erfinder: MEIER, Ernst-August, 31162 Salzdetfurth (DE); GOMEZ-KERBER, Giancarlo, 19243 Harst (DE); MUCHOROWSKI, Janusz, 21035 Hamburg (DE); KRAUSE, Karl-Heinz, 09123 Chemnitz (DE); MERKMANN, Gerhard, 99867 Gotha (DE)
(74) Vertreter: Finger, Karsten
(86) Internationale Anmeldenummer: PCT/DE2002/004590
(87) Internationale Veröffentlichungsnummer: WO 2003/055809

(56) Entgegenhaltungen:
- EP-A- 0 322 866
- DE-A- 3 224 177
- US-A- 5 034 164
- US-A- 5 182 317
- PATENT ABSTRACTS OF JAPAN vol. 008, no. 030 (C-209), 8. Februar 1984 (1984-02-08) & JP 58 193703 A (TEIJIN KK), 11. November 1983 (1983-11-11)

## Beschreibung

Die Erfindung betrifft eine Klärbeckenmembran aus polymerem Werkstoff, die mittels einer Perforation gasdurchlässig ist, wobei dem polymeren Werkstoff ein abwasserbiologisch aktiver Inhibitor beigemischt ist, der schwerlöslich in Wasser ist sowie im polymeren Werkstoff im Wesentlichen gleichmäßig verteilt ist.

Die mehrstufige Reinigung von kommunalen und industriellen Abwässern in Klärbecken von Klärwerken endet mit einer biologischen Stufe. In dieser Reinigungsstufe kommen für den Gaseintrag (Luft, mit Sauerstoff angereicherte Luft, Sauerstoff) Klärbeckenmembranen zum Einsatz (DE 295 13 922 U1).

Für die Klärbecken muss nun ein ausreichender Sauerstoffeintrag gesichert sein, da Sauerstoffmangel zum Absterben der Mikroorganismen (Bakterien) führt. Die Lochungen bzw. Schlitze der Membranen setzen sich dann mit den abgestorbenen Bakterien zu. Der notwendige Sauerstoffeintrag ist somit nicht mehr gegeben. Auch Algen können die Gasdurchlässigkeit der Membranen negativ beeinflussen.

Eine gattungsgemäße Klärbeckenmembran ist aus der Offenlegungsschrift DE 32 24 177 A1 bekannt. Die Klärbeckenmembran ist dabei als Schlauch ausgebildet, der mit einer Außenschicht versehen ist, die im Vergleich zu den darunter gelegenen Schichten wesentlich weniger organische Substanzen und/oder eine größere Menge Substanzen gegen Mikroorganismen aufweist. Als Inhibitor werden insbesondere organische Quecksilber-, Kupfer-, Zink- und Zinnverbindungen sowie Dimethyldithiocarbamat verwendet.

Im Rahmen einer Weiterentwicklung besteht die Aufgabe darin, eine Klärbeckenmembran bereitzustellen, die eine dauerhafte Gasdurchlässigkeit gewährleistet.

Gelöst wird diese Aufgabe dadurch, dass
- der Inhibitor ein Inhibitorensystem ist, gebildet aus einem Mikroorganismeninhibitor und einem Algeninhibitor, wobei in Bezug auf die Gesamtmasse des polymeren Werkstoffes der Anteil des Inhibitorensystems 0,1 bis 5,0 Gew.-% beträgt; und dass
- der polymere Werkstoff eine vulkanisierte Kautschukmischung ist, und zwar auf der Basis eines Ethylen-Propylen-Dien-Mischpolymerisates (EPDM), von Nitrilkautschuk (NBR) oder Silikonkautschuk, die jeweils unverschnitten sind, oder auf der Basis eines EPDM/NBR-Verschnittes, wobei in Bezug auf die Gesamtmasse des polymeren Werkstoffes der Anteil der Kautschuk- bzw. Verschnittkomponente 10 bis 50 Gew.-% beträgt.

Als Inhibitoren werden verwendet:
- 2,4,4'-trichlor-2'-hydroxy-diphenyl-ether, insbesondere als Mikroorganismeninhibitor;
- N'-tert.butyl-N-cyclopropyl-6-(methylthio)-1,3,5-triazin-2,4-diamin, insbesondere als Algeninhibitor.

Im Rahmen einer besonders vorteilhaften Variante ist dem polymeren Werkstoff ein Trägermaterial beigemischt, das mit dem Inhibitorensystem beladen ist, und zwar unter Bildung eines entsprechenden Adduktes. Das Trägermaterial ist insbesondere ein Molekularsieb in Form eines Metall-Aluminium-Silikates der folgenden Formel:

Meₙ [(AlO₂)ₓ · (SiO₂)_{y}]

mit oder ohne Kristallwasser, insbesondere

Na₈₆ [(AlO₂)₈₆ · (SiO₂)₁₀₆]

mit oder ohne Kristallwasser

Ein häufig verwendetes Metall-Aluminium-Silikat ist:

Na₈₆ [(AlO₂)₈₆ · (SiO₂)₁₀₆]· 276 H₂O

Dabei wird das Kristallwasser entweder vollständig oder partiell dehydratisiert. Die frei gewordenen Kristallwasserplätze innerhalb des Metall-Aluminium-Silikat-Gitters werden dann durch Beladung mit dem Inhibitorensystem belegt. Wirksam ist dann das entsprechende Addukt.

Das Inhibitorensystem ist im polymeren Werkstoff im Wesentlichen gleichmäßig verteilt. Sein Anteil in Bezug auf die Gesamtmasse des polymeren Werkstoffes beträgt 0,1 bis 5,0 Gew.-%.

Der polymere Werkstoff ist weichmacherarm, vorzugsweise weichmacherfrei. Die Werkstoffvarianten sind:
- Der polymere Werkstoff ist eine vulkanisierte Kautschukmischung, und zwar auf der Basis eines Ethylen-Propylen-Dien-Mischpolymerisates (EPDM), von Nitrilkautschuk (NBR) oder Silikonkautschuk, die jeweils unverschnitten sind.
- Der polymere Werkstoff ist eine vulkanisierte Kautschukmischung auf der Basis eines EPDM/NBR-Verschnittes.

In Bezug auf die Gesamtmasse des polymeren Werkstoffes beträgt der Anteil der Polymer- bzw. Kautschuk- bzw. Verschnittkomponente 10 bis 50 Gew.-%. Der Kautschukmischung sind dabei noch übliche Mischungsingredienzien beigemischt, wie Vulkanisationsmittel (z.B. Schwefel oder Schwefelspender) und zumeist Beschleuniger, Füllstoff (z.B. Ruß), Zinkoxid sowie gegebenenfalls weitere Zusatzstoffe (z.B. Alterungsschutzmittel).

Hinsichtlich der Konstruktion ist die Klärbeckenmembran ausgebildet als:
- Tellermembran;
- Schlauchmembran oder
- Plattenbelüftermembran.

Die Erfindung wird nun anhand eines Ausführungsbeispiels unter Bezugnahme auf schematische Zeichnungen erläutert. Es zeigen:

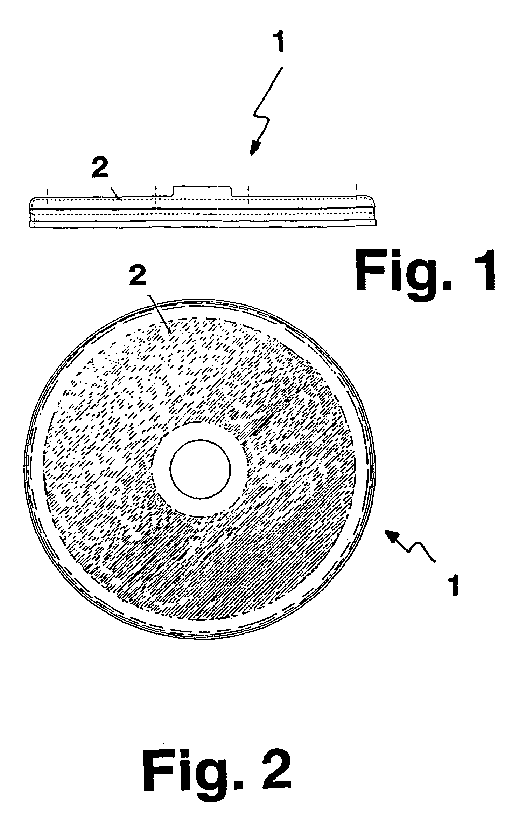

- Fig. 1: einen Querschnitt einer Tellermembran;
- Fig. 2: eine Draufsicht einer Tellermembran gemäß Fig. 1.

In Verbindung mit diesen Figuren gilt folgende Bezugszeichenliste:
   - **1**: Klärbeckenmembran
   - **2**: Perforation (Schlitzperforation)

Da dem polymeren Werkstoff ein Inhibitorensystem aus einem Mikroorganismeninhibitor und einem Algeninhibitor beigemischt ist, bleibt die Schlitzperforation **2** der Klärbeckenmembran **1** dauerhaft gasdurchlässig.

## Patentansprüche

1. Klärbeckenmembran (1) aus polymerem Werkstoff, die mittels einer Perforation (2) gasdurchlässig ist, wobei dem polymeren Werkstoff ein abwasserbiologisch aktiver Inhibitor beigemischt ist, der schwerlöslich in Wasser ist sowie im polymeren Werkstoff im Wesentlichen gleichmäßig verteilt ist, **dadurch gekennzeichnet, dass**
- der Inhibitor ein Inhibitorensystem ist, gebildet aus einem Mikroorganismeninhibitor und einem Algeninhibitor, wobei in Bezug auf die Gesamtmasse des polymeren Werkstoffes der Anteil des Inhibitorensystems 0,1 bis 5,0 Gew.-% beträgt; und dass
- der polymere Werkstoff eine vulkanisierte Kautschukmischung ist, und zwar auf der Basis eines Ethylen-Propylen-Dien-Mischpolymerisates (EPDM), von Nitrilkautschuk (NBR) oder Silikonkautschuk, die jeweils unverschnitten sind, oder auf der Basis eines EPDM/NBR-Verschnittes, wobei in Bezug auf die Gesamtmasse des polymeren Werkstoffes der Anteil der Kautschuk- bzw. Verschnittkomponente 10 bis 50 Gew.-% beträgt.

2. Klärbeckenmembran nach Anspruch 1 oder 2, **dadurch gekennzeichnet, dass** der Inhibitor, insbesondere als Mikroorganismeninhibitor, 2,4,4'-trichlor-2'-hydroxy-diphenyl-ether ist.

3. Klärbeckenmembran nach Anspruch 1 oder 2, **dadurch gekennzeichnet, dass** der Inhibitor, insbesondere als Algeninhibitor, N'-tert.butyl-N-cyclopropyl-6-(methylthio)-1,3,5-triazin-2,4-diamin ist.

4. Klärbeckenmembran nach einem der Ansprüche 1 bis 3, **dadurch gekennzeichnet, dass** dem polymeren Werkstoff ein Trägermaterial beigemischt ist, das mit dem Inhibitorensystem beladen ist, und zwar unter Bildung eines entsprechenden Adduktes.

5. Klärbeckenmembran nach Anspruch 4, **dadurch gekennzeichnet, dass** das Trägermaterial ein Molekularsieb ist, vorzugsweise auf der Basis eines Natrium-Aluminium-Silikates.

6. Klärbeckenmembran nach einem der Ansprüche 1 bis 5, **dadurch gekennzeichnet, dass** der polymere Werkstoff weichmacherarm, vorzugsweise weichmacherfrei ist.

7. Klärbeckenmembran nach einem der Ansprüche 1 bis 6, **dadurch gekennzeichnet, dass** diese als Tellermembran ausgebildet ist.

8. Klärbeckenmembran nach einem der Ansprüche 1 bis 6, **dadurch gekennzeichnet, dass** diese als Schlauchmembran ausgebildet ist.

9. Klärbeckenmembran nach einem der Ansprüche 1 bis 6, **dadurch gekennzeichnet, dass** diese als Plattenbelüftermembran ausgebildet ist.

## Claims

1. Settling-tank membrane (1) made of polymeric material, which is gas-permeable by virtue of a perforation (2), where the polymeric material has received an admixture of an inhibitor which has biological activity in respect of wastewater and which is sparingly soluble in water and which in essence has uniform dispersion in the polymeric material, **characterized in that**
- the inhibitor is an inhibitor system formed from a microorganism inhibitor and from an algae inhibitor, where the proportion of the inhibitor system, based on the total mass of the polymeric material, is from 0.1 to 5.0% by weight; and that
- the polymeric material is a vulcanized rubber mixture, and specifically one based on an ethylene-propylene-diene copolymer (EPDM), on nitrile rubber (NBR) or on silicone rubber, which are respectively unblended, or based on an EPDM/NBR blend, where the proportion of the rubber component and, respectively, blend component, based on the total mass of the polymeric material, is from 10 to 50% by weight.

2. Settling-tank membrane according to Claim 1, **characterized in that** the inhibitor, in particular in the form of microorganism inhibitor, is 2,4,4'-trichloro-2'-hydroxydiphenyl ether.

3. Settling-tank membrane according to Claim 1 or 2, **characterized in that** the inhibitor, in particular in the form of algae inhibitor, is N'-tert-butyl-N-cyclopropyl-6-(methylthio)-1,3,5-triazine-2,4-diamine.

4. Settling-tank membrane according to any of Claims 1 to 3, **characterized in that** the polymeric material has received an admixture of a carrier material which has been loaded with the inhibitor system, and specifically with formation of a corresponding adduct.

5. Settling-tank membrane according to Claim 4, **characterized in that** the carrier material is a molecular sieve, preferably based on a sodium aluminium silicate.

6. Settling-tank membrane according to any of Claims 1 to 5, **characterized in that** the polymeric material has low plasticizer content, or preferably is plasticizer-free.

7. Settling-tank membrane according to any of Claims 1 to 6, **characterized in that** it has been designed in the form of disc-shaped membrane.

8. Settling-tank membrane according to any of Claims 1 to 6, **characterized in that** it has been designed in the form of tubular membrane.

9. Settling-tank membrane according to any of Claims 1 to 6, **characterized in that** it has been designed in the form of plate-aerator membrane.

## Revendications

1. Membrane (1) pour bassin de décantation en matériau polymère, qui est perméable au gaz au moyen d'une perforation (2), le matériau polymère étant mélangé avec un inhibiteur à action biologique sur les eaux usées, qui est difficilement soluble dans l'eau et qui est réparti de manière sensiblement homogène dans le matériau polymère, **caractérisée en ce que**
- l'inhibiteur est un système d'inhibiteurs formé à partir d'un inhibiteur de microorganismes et d'un inhibiteur d'algues, la proportion du système d'inhibiteurs étant de 0,1 à 5,0 % en poids par rapport à la masse totale du matériau polymère ; et **en ce que**
- le matériau polymère est un mélange de caoutchouc vulcanisé, à savoir à base d'un copolymère éthylène-propylène-diène (EPDM), de caoutchouc nitrile (NBR) ou de caoutchouc de silicone, qui sont à chaque fois non coupés, ou à base d'un mélange EPDM/NBR, la proportion du composant de caoutchouc ou de mélange étant de 10 à 50 % en poids par rapport à la masse totale du matériau polymère.

2. Membrane pour bassin de décantation selon la revendication 1, **caractérisée en ce que** l'inhibiteur, notamment en tant qu'inhibiteur de microorganismes, est l'éther 2,4,4'-trichloro-2'-hydroxy-diphénylique.

3. Membrane pour bassin de décantation selon la revendication 1 ou 2, **caractérisée en ce que** l'inhibiteur, notamment en tant qu'inhibiteur d'algues, est la N'-tert-butyl-N-cyclopropyl-6-(méthylthio)-1,3,5-triazine-2,4-diamine.

4. Membrane pour bassin de décantation selon l'une quelconque des revendications 1 à 3, **caractérisée en ce que** le matériau polymère est mélangé avec un matériau support qui est chargé avec le système d'inhibiteurs, et ce en formant un produit d'addition correspondant.

5. Membrane pour bassin de décantation selon la revendication 4, **caractérisée en ce que** le matériau support est un tamis moléculaire, de préférence à base d'un silicate de sodium et d'aluminium.

6. Membrane pour bassin de décantation selon l'une quelconque des revendications 1 à 5, **caractérisée en ce que** le matériau polymère est pauvre en plastifiants, de préférence exempt de plastifiants.

7. Membrane pour bassin de décantation selon l'une quelconque des revendications 1 à 6, **caractérisée en ce que** celle-ci est conçue sous la forme d'une membrane à disque.

8. Membrane pour bassin de décantation selon l'une quelconque des revendications 1 à 6, **caractérisée en ce que** celle-ci est conçue sous la forme d'une membrane tubulaire.

9. Membrane pour bassin de décantation selon l'une quelconque des revendications 1 à 6, **caractérisée en ce que** celle-ci est conçue sous la forme d'une membrane de ventilateur de plaque.
